# EUROPÄISCHE PATENTSCHRIFT

(11) **EP 4 278 105 B1**
(45) Veröffentlichungstag und Bekanntmachung des Hinweises auf die Patenterteilung: **07.01.2026**
(21) Anmeldenummer: 22700530.3
(22) Anmeldetag: 12.01.2022
(51) Int. Cl.: F16C 35/04, F16C 29/00, F16C 29/04, F16C 23/08, F16C 19/52

(54) **LAGERANORDNUNG FÜR EINEN KONVERTER**
BEARING ASSEMBLY FOR A CONVERTER
ENSEMBLE PALIER POUR CONVERTISSEUR

(30) Priorität: 13.01.2021 DE 102021100544
(43) Veröffentlichungstag der Anmeldung: 22.11.2023
(73) Patentinhaber: Schaeffler Technologies AG & Co. KG, 91074 Herzogenaurach (DE)
(72) Erfinder: ROTH, Herbert, 97422 Schweinfurt (DE); WEIPPERT, Philipp, 97337 Dettelbach (DE)
(74) Vertreter: Schaeffler Technologies
(86) Internationale Anmeldenummer: PCT/DE2022/100008
(87) Internationale Veröffentlichungsnummer: WO 2022/152348

(56) Entgegenhaltungen:
- US-A- 3 170 737
- US-A- 3 291 542

## Beschreibung

Die Erfindung betrifft eine für die Verwendung in einem Konverter geeignete Lageranordnung nach dem Oberbegriff des Anspruchs 1.

Eine gattungsgemäße Lageranordnung ist beispielsweise aus der US 3 291 542 A bekannt. Die bekannte Lageranordnung umfasst ein als zweireihiges Pendelrollenlager ausgebildetes Wälzlager zur Lagerung eines Zapfens eines Konverters. Ein Gehäuseteil, in welchem das Wälzlager aufgenommen ist, ist gegenüber einem weiteren, äußeren Gehäuseteil in Axialrichtung des Wälzlagers verschiebbar, so dass insgesamt die Funktionalität eines Loslagers gegeben ist. Die relative Verschiebbarkeit der beiden Gehäuseteile wird nach der US 3 291 542 A mit Hilfe einer zweireihigen Linearwälzlagerung erreicht. Jede Wälzkörperreihe der Linearlagerung ist hierbei durch tonnenförmige Wälzkörper gebildet, wobei die Rotationsachsen der ersten Reihe an Wälzkörpern in einer ersten Ebene und die Rotationsachsen der zweiten Reihe an Wälzkörpern in einer zweiten Ebene liegen und die beiden Ebenen einen stumpfen Winkel von deutlich weniger als 180° einschließen. Dies ist gleichbedeutend damit, dass eine Radiallinie eines der ersten Reihe zuzurechnenden Wälzkörpers mit einer Radiallinie eines der zweiten Reihe zuzurechnenden Wälzkörpers einen spitzen Winkel einschließt. Nach der US 3 291 542 A soll der Schnittpunkt zwischen den beiden Radiallinien oberhalb der Rotationsachse des mit dem Pendelrollenlager gelagerten Zapfens liegen, womit eine stabile, selbstausrichtende Lagerung gegeben sein soll.

Unter einem Konverter wird allgemein eine bei der Stahlherstellung zum Einsatz kommende Anlage verstanden, in der flüssiges Roheisen gefrischt wird. Hierbei befindet sich das Roheisen in einem mit Feuerfestmaterial ausgekleideten Behälter, welcher kippbar gelagert ist. Zur Lagerung des Behälters können Wälzlager, insbesondere Rollenlager, verwendet werden, von welchen eines als Festlager und das andere als Loslager fungiert. Aufgrund der temperaturbedingten Ausdehnungen, die beim Betrieb des Konverters auftreten, kann es erforderlich sein, am Loslager axiale Verschiebungen von mehreren 10 mm aufzunehmen.

Bei einer in der DE 24 15 341 C3 beschriebenen Lagerung für kippbare Konverter wird eine Loslagerfunktion durch eine Pendelabstützung bereitgestellt. Hierbei ist eine Pendelstütze, welche die Lagerlast aufnimmt, ebenso wie eine zur Pendelstütze parallel angeordnete Lenkerstange an einer Stützplatte angelenkt, auf welcher sich das als Loslager fungierende Lager, bei welchem es sich um ein Gleit-Gelenk- oder um ein Wälzlager handeln kann, befindet.

Alternativ zu einer Linearwälzlagerung oder zu einer Pendelabstützung kommt auch eine Schiebebüchse in Betracht, um eine Loslagerfunktion zu realisieren, wie prinzipiell zum Beispiel in der AT 274870 B beschrieben. In diesem Fall ist eine Drehsicherung zwischen einer Schiebebüchse und einer sogenannten Schonbüchse gegeben. In der Schiebebüchse ist ein Außenring eines Loslagers gelagert, wobei der zugehörige Innenring starr auf einem Zapfen eines Konverters angeordnet ist.

Weitere Bauformen von Konvertern, die an Kippzapfen aufgehängt sind, sind beispielsweise ein der Dokumenten DE 1 583 302 B und DE 1 253 738 A offenbart.

Grundsätzlich kann sich ein zum Kippen eines Konverters vorgesehener Antrieb entweder auf der Seite des Festlagers oder auf der Seite des Loslagers befinden. Im Fall eines in der DE 25 00 645 A1 beschriebenen Antriebs für einen Konverter ist ein Antrieb auf der Loslagerseite gegeben, wobei zur Drehmomentübertragung auf einen Zapfen des Konverters mehrere ballige Rollen vorgesehen sind, die in Ausnehmungen des Zapfens und zugleich in Ausnehmungen, die sich in einem antreibenden Maschinenteil befinden, eingreifen. Mit Hilfe der balligen Rollen soll die Antriebsvorrichtung nach der DE 25 00 645 A1 in der Lage sein, sowohl axiale Bewegungen als auch Winkelauslenkungen aufzunehmen.

Der Erfindung liegt die Aufgabe zugrunde, eine gegenüber dem genannten Stand der Technik weiterentwickelte, insbesondere für die Lagerung eines Konverters geeignete, besonders robuste, die Funktion eines Loslagers erfüllende Lageranordnung anzugeben, welche sich durch langfristig gleichbleibende Betriebseigenschaften auszeichnet.

Diese Aufgabe wird erfindungsgemäß gelöst durch eine Lageranordnung mit den Merkmalen des Anspruchs 1. Die Lageranordnung umfasst in an sich bekannter Grundkonzeption ein Wälzlager, insbesondere in Form eines Pendelrollenlagers, welches einen Innenring und einen Außenring umfasst, wobei die Lagerringe ein- oder mehrteilig ausgebildet sein können. In jedem Fall ist der Außenring in einem Innengehäuse angeordnet, welches gegenüber einem Außengehäuse mittels einer zweireihigen Linearwälzlagerung in Axialrichtung des Wälzlagers verschiebbar ist. Hierbei liegen die Rotationsachsen sämtlicher Wälzkörper einer jeden Reihe der Linearwälzlagerung jeweils in einer gemeinsamen Ebene, wobei die beiden Ebenen gegeneinander schräggestellt sind. Nach dem Kennzeichen des Anspruchs 1 ist mit dem Innengehäuse mindestens ein Verdrehsicherungselement verbunden, welches in eine Gegenkontur auf der Seite des Außengehäuses eingreift.

Ergänzend zu einem Selbstzentrierungseffekt, der durch die zweireihige, V-förmige Linearwälzlagerung gegeben ist, sorgt die gesonderte Verdrehsicherung, welche mindestens ein Verdrehsicherungselement auf Seiten des verschiebbaren Elementes, das heißt Innengehäuses, und eine zugehörige Gegenkontur, insbesondere in Form einer Längsnut, auf Seiten der Außengehäuses umfasst, für eine auch im langfristigen Betrieb unter hohen, wechselnden Krafteinwirkungen gleichbleibende Winkelrelation zwischen dem Innengehäuse und dem Außengehäuse. Damit ist insbesondere sichergestellt, dass die Wälzkörper, beispielsweise Zylinderrollen oder Tonnenrollen, der Linearwälzlagerung stets in gleicher Weise auf den zugehörigen, in Relation zum Innengehäuse beziehungsweise zum Außengehäuse ortsfesten Laufbahnen abrollen.

Das Verdrehsicherungselement kann zwischen den beiden Reihen der Linearwälzlagerung angeordnet sein, wobei es sich insbesondere mittig zwischen den beiden Wälzkörperreihen der Linearlagerung befinden kann. Statt einer Verbindung des Verdrehsicherungselementes mit dem Innengehäuse kommt prinzipiell auch eine Verbindung des Verdrehsicherungselementes mit dem Außengehäuse in Betracht, wobei in diesem Fall eine zugehörige Gegenkontur am Innengehäuse vorzusehen ist. Auch eine integrale Ausbildung des Verdrehsicherungselementes und/oder der Gegenkontur mit dem Innen- oder Außengehäuse ist möglich. Beispielsweise können Konturen der Verdrehsicherung gusstechnisch direkt als Konturen eines Gehäuseteils vorliegen.

Sofern die Gegenkontur nicht unmittelbar durch das Innen- oder Außengehäuse gebildet ist, kommt eine Ausbildung der Gegenkontur insbesondere durch das Verdrehsicherungselement führende Gleitplatten in Betracht. Bei den Gleitplatten handelt es sich in vorteilhafter Ausgestaltung um austauschbare Elemente der Lageranordnung.

Hierbei kann jede Gleitplatte einen einseitigen Abschluss einer im Außengehäuse liegenden Platte darstellen, wobei die Platte auf ihrer der Gleitplatte gegenüberliegenden Seite an einem Lagerelement der Linearwälzlagerung abstützt. Unmittelbar durch dieses Lagerelement kann eine Wälzkörperlaufbahn für die Wälzkörper, insbesondere Rollen, der Linearwälzlagerung bereitgestellt sein.

Die genannten Platten können jeweils ein- oder mehrteilig ausgebildet sein. Im Fall einer einteiligen Gestaltung stellt die Gleitplatte einen integralen Bestandteil der Platte dar, wobei in demjenigen Bereich der Platte, welche als mit dem Verdrehsicherungselement direkt zusammenwirkende Gleitplatte fungiert, eine reibungsmindernde Beschichtung vorhanden sein kann. Ist dagegen die Gleitplatte als gesondertes Element ausgeführt, so kontaktiert sie ein Grundelement der Platte, wobei das Grundelement typischerweise um ein Vielfaches größer als die Gleitplatte ist und sich hinsichtlich der Werkstoffe und der mechanischen Eigenschaften von der Gleitplatte unterscheiden kann. Die durch die Gleitplatten gebildeten, das Verdrehsicherungselement kontaktierenden Gleitflächen können hierbei in zwei zueinander parallelen Ebenen liegen, wobei die Mittelachse des Wälzlagers, das heißt Kippachse der Lageranordnung, zwischen diesen beiden Ebenen angeordnet ist.

Die Dicke des Grundelementes ist gemäß verschiedener möglicher Ausgestaltungen nicht einheitlich. Beispielsweise nimmt die Dicke eines jeden Grundelementes ausgehend von der Gleitplatte, welche sich nahe einer die Mittelachse der Lageranordnung schneidenden, vertikalen Mittelebene befindet, nach außen hin ab.

Unabhängig von der exakten geometrischen Gestaltung der ein- oder mehrteiligen, eine Gegenkontur der Verdrehsicherung bereitstellenden Platte, kann sich das der Linearwälzlagerung zuzurechnende Lagerelement, welches die Platte kontaktiert, auf seiner der Platte abgewandten Seite an einer Kontur des Außengehäuses abstützen.

Was die Verdrehsicherungselemente betrifft, sind verschiedenste geometrische Gestaltungen möglich. Beispielsweise kann die Verdrehsicherung ein einziges bolzenförmiges Verdrehsicherungselement oder eine Mehrzahl solcher bolzenförmiger Elemente umfassen. Im letztgenannten Fall können mehrere stiftförmige Verdrehsicherungselemente in Reihe angeordnet sein, was gleichbedeutend damit ist, dass die Mittelachsen aller Verdrehsicherungselemente in einer gemeinsamen Ebene liegen. Sämtliche Verdrehsicherungselemente greifen in diesem Fall in eine einzige Nut ein, welche die Gegenkontur der Verdrehsicherung darstellt.

Eine nutförmige Gegenkontur der Verdrehsicherung kann auch in Bauformen gegeben sein, in welchen ein einziges, rippenförmiges Verdrehsicherungselement vorhanden ist. Insbesondere in diesem Fall kann das rippen- oder leistenförmige Verdrehsicherungselement unmittelbar entweder durch das Innengehäuse oder durch das Außengehäuse der Lageranordnung gebildet sein.

Beim mehrteilig ausgeführten Gehäuse der Lageranordnung kann es sich insgesamt um ein Stehlagergehäuse handeln. Zum technischen Hintergrund wird beispielhaft auf die Dokumente DE 401112 A und DE 10 2012 222 595 A1 hingewiesen. Die gesamte Lageranordnung ist insbesondere als Loslagerung einer Konverterlagerung verwendbar. Als zugehöriges Festlager kann hierbei ein weiteres Wälzlager, insbesondere in Form eines Pendelrollenlagers, zum Einsatz kommen.

Nachfolgend werden mehrere Ausführungsbeispiele der Erfindung anhand einer Zeichnung näher erläutert. Hierin zeigen:
- Fig. 1: eine Lageranordnung eines Konverters in stirnseitiger Ansicht,
- Fig. 2: ein Detail der Anordnung nach Fig. 1,
- Fig. 3: eine schematische Draufsicht auf eine Verdrehsicherung der Konverter-Lageranordnung nach Fig. 1,
- Fig. 4: eine alternative Gestaltung einer Verdrehsicherung einer Lagerung, nämlich Loslagerung, eines Konverters in einer Ansicht gemäß Fig. 3.

Die folgenden Erläuterungen beziehen sich, soweit nicht anders angegeben, auf beide Ausführungsbeispiele. Einander entsprechende oder prinzipiell gleichwirkende Teile sind in allen Figuren mit dem gleichen Bezugszeichen gekennzeichnet.

Eine insgesamt mit dem Bezugszeichen 1 gekennzeichnete Lageranordnung ist als Loslager ausgebildet und zur Verwendung in einem nicht weiter dargestellten Konverter vorgesehen. Hinsichtlich der prinzipiellen Funktion der Lageranordnung 1 wird auf den eingangs zitierten Stand der Technik verwiesen.

Die Lageranordnung 1 umfasst ein mehrteiliges Gehäuse 2 mit einem Innengehäuse 3 und einem Außengehäuse 4. Ein als Pendelrollenlager ausgebildetes Wälzlager 5, dessen Wälzkörper, das heißt Tonnenrollen, mit 6 bezeichnet sind, weist einen Innenring 7 auf, welcher fest auf einen Zapfen 8 des Konverters aufgesetzt ist. Die Mittelachse des Wälzlagers 5 und damit auch des Zapfens 8 ist als Kippachse KA der Lageranordnung 1 bezeichnet.

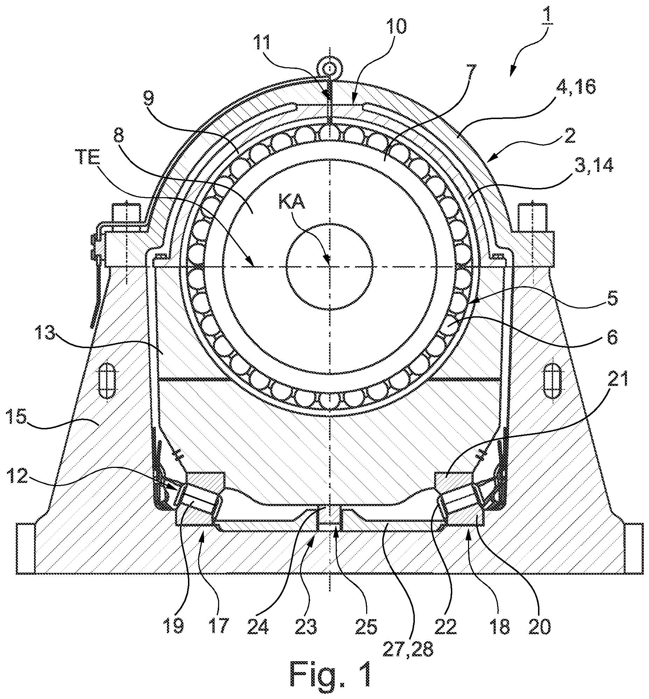

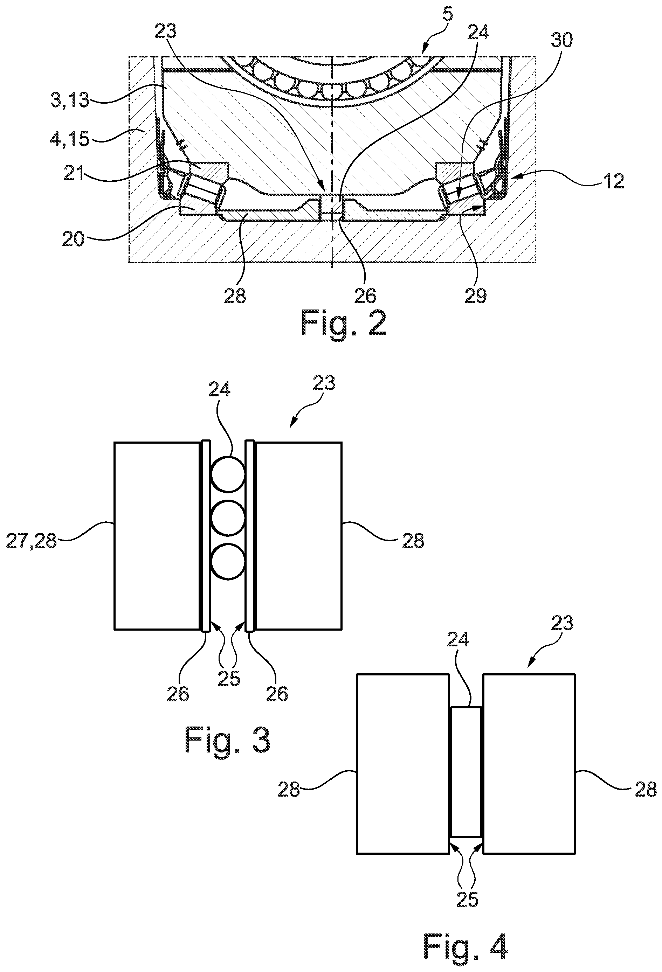

Der mit 9 bezeichnete Außenring des Wälzlagers 5 ist starr in das Innengehäuse 3 eingesetzt, wobei er sowohl ein unteres Gehäuseinnenteil 13 als auch ein oberes Gehäuseinnenteil 14 kontaktiert. In grundsätzlich vergleichbarer Weise wie das Innengehäuse 3 ist das Außengehäuse 4 aus einem unteren Gehäuseaußenteil 15 und einem oberen Gehäuseaußenteil 16 zusammengesetzt. Eine horizontale Teilungsebene TE des Innengehäuses 3 sowie des Außengehäuses 4 liegt auf Höhe der Kippachse KA. Abweichend von der in den Figuren 1 und 2 dargestellten Ausführungsform sind auch Bauformen realisierbar, bei denen ein Pendelrollenlager als Wälzlager 5 lediglich in einem Unterteil liegt und das Oberteil entfällt.

Oberhalb der Kippachse KA ist ein Kontaktbereich 10 zwischen dem oberen Gehäuseinnenteil 14 und dem oberen Gehäuseaußenteil 16 gegeben. Der Kontaktbereich 10 ist von einem Schmiermittelkanal 11 durchzogen, über welchen dem Wälzlager 5 Schmiermittel zuführbar ist. Im Kontaktbereich 10 ist eine O-Ring-Dichtung installiert, die sicherstellt, dass von außen zugeführtes Schmierfett nicht in den Spalt zwischen Innengehäuse 3 und Außengehäuse 4 fließt, sondern durch die in 12 Uhr Position befindliche Bohrung, das heißt den Schmiermittelkanal 11, durch das Innengehäuse 11 hindurch in das Wälzlager 5 gelangt.

Das Innengehäuse 3 ist im Außengehäuse 4 mittels einer Linearwälzlagerung 12 längs der Kippachse KA beschränkt verschiebbar, womit die gewünschte Loslagerfunktion der Lageranordnung 1 gegeben ist. Die Linearwälzlagerung 12 ist als zweireihige Wälzlagerung ausgeführt, wobei zwei Reihen 17, 18 an Wälzkörpern 19, nämlich Rollen, am unteren Rand des unteren Gehäuseinnenteils 13 angeordnet sind. Sämtliche Mittelachsen der Wälzkörper 19 der ersten Reihe 17 liegen in einer gemeinsamen Ebene. Entsprechendes gilt für die Wälzkörper 19 der zweiten Reihe 18. Jede der beiden Ebenen ist etwas schräggestellt, was den Einschluss eines spitzen Winkels zwischen der betreffenden Ebene und der Teilungsebene TE bedeutet. Zwischen den beiden genannten, durch die Lage der Wälzkörper 19 definierten Ebenen, welche sich in einer vertikal durch die Kippachse KA gelegten Ebene schneiden, ist damit ein stumpfer Winkel eingeschlossen. Insgesamt ist damit eine V-Form der zweireihigen Linearwälzlagerung 12 gegeben. Diese V-Form der Linearwälzlagerung 12 hat, was die Lage des Innengehäuses 3 gegenüber dem Außengehäuse 4 betrifft, einen selbstzentrierenden Effekt.

Jede Reihe 17, 18 an Wälzkörpern 19 rollt zum einen auf einem statischen Lagerelement 20 ab, welches in das untere Gehäuseaußenteil 15 eingesetzt ist, und zum anderen auf einem verschiebbaren Lagerelement 21, welches mit dem unteren Gehäuseinnenteil 13 verbunden ist. Der Druckwinkel, in welchem Lasten zwischen den unteren Gehäuseteilen 13,15 über die Wälzkörper 19 übertragen werden, ist durch die Form und Lage der verschiedenen, jeweils leistenförmigen Lagerelemente 20, 21 bestimmt. Käfige, in denen die Wälzkörper 19 der Linearwälzlagerung 12 geführt sind, sind mit 22 bezeichnet.

Die Käfige 22 sind derart gestaltet, dass sie in Axialrichtung der Wälzkörper 19 lediglich mit geringem Spiel gegenüber den Lagerelementen 20 verschiebbar sind. Dies wird erreicht, indem jeder Käfig 22 mit dem zugehörigen Lagerelement 20 überlappt. Damit ist auch eine Führung der Wälzkörper 19 in deren Axialrichtung auf dem Lagerelement 20 gegeben. Ebenso ist eine Führung der Wälzkörper 19 durch Borde der Lagerelemente 20, 21 der Linearwälzlagerung 12 möglich.

Um unabhängig davon, ob und inwieweit das Innengehäuse 3 gegenüber dem Außengehäuse 4 verschoben wird, die Winkelrelation zwischen Innengehäuse 3 und dem Außengehäuse 4 auch bei stoßartigen Belastungen auf den Zapfen 8 konstant zu halten, ist eine Verdrehsicherung 23 vorgesehen. Die Verdrehsicherung 23, welche Verdrehungen des Innengehäuses 3 um die Kippachse KA unterbindet, umfasst mindestens ein am Innengehäuse 3 - genauer: am unteren Gehäuseinnenteil 13 - angeordnetes Verdrehsicherungselement 23, welches mit einer Gegenkontur 25, die sich auf der Seite des Außengehäuses 4 befindet, zusammenwirkt.

Die Gegenkontur 25 ist in den Ausführungsbeispielen durch Gleitplatten 26 gebildet, welche sich im unteren Gehäuseaußenteil 16 befinden. Jede das Verdrehsicherungselement 23 flankierende Gleitplatte 26 ist einer Platte 28 zuzurechnen, welche in das untere Gehäuseaußenteil 16 eingelegt ist und auf ihrer dem Verdrehsicherungselement 23 abgewandten Seite eines der beiden statischen Lagerelemente 20 kontaktiert. Das statische Lagerelement 20 wiederum stützt sich an einer Kontur 29 des Außengehäuses 4 ab, womit letztlich in Umfangsrichtung des Wälzlagers 5 wirkende Kräfte zwischen dem Innengehäuse 3 und dem Außengehäuse 4 übertragbar sind. Gleichzeitig haben die mit 30 bezeichneten Wälzkörperlaufbahnen der statischen Lagerelemente 20, welche in der beschriebenen Weise V-förmig schräggestellt sind, eine stabilisierende Wirkung. Was das über die gesamte Nutzungsdauer korrekte Abrollen der Wälzkörper 19 auf den Lagerelementen 20, 21 betrifft, sorgt die präzise, mittels der Verdrehsicherung 23 realisierte Führung des Innengehäuses 3 im Außengehäuse 4 für gleichbleibende geometrische Verhältnisse.

In der Ausführungsform nach Fig. 1 existieren, wie in Fig. 3 veranschaulicht ist, drei bolzenförmige Verdrehsicherungselemente 24, welche in das untere Gehäuseinnenteil 13 eingesetzt sind. Jedes Verdrehsicherungselement 24 kontaktiert in diesem Fall Gleitplatten 26, welche als gesonderte Elemente an Grundelemente 27 angesetzt sind, die ebenfalls den Platten 28 zuzurechnen sind. Auch Ausführungsformen mit lediglich zwei stiftförmigen Verdrehsicherungselementen 24 oder mit mehr als drei Verdrehsicherungselementen 24 sind möglich. In allen Fällen schneiden die Mittelachsen der zylindrischen Verdrehsicherungselemente 24 die Kippachse KA, wobei die Verdrehsicherungselemente 24 auch unmittelbar durch das untere Gehäuseinnenteil 13 gebildet sein können. In abgewandelter, nicht dargestellter Bauform könnten die Gleitplatten 26 direkt an einer Kontur des unteren Gehäuseaußenteils 15 anliegen, wobei auch in diesem Fall die Gleitplatten 26 austauschbar wären. In allen Fällen liegen die beiden Gleitplatten 26 in zueinander parallelen, vertikalen Ebenen.

Abweichend vom Ausführungsbeispiel nach den Figuren 1 bis 3 ist im Ausführungsbeispiel nach Fig. 4 ein einziges, leistenförmiges Verdrehsicherungselement 24 vorhanden, welches in diesem Fall eine integrale Kontur des unteren Gehäuseinnenteils 13 darstellt. Ebenso könnte auch hier das Verdrehsicherungselement 24 als gesondertes Element mit dem unteren Gehäuseteil 13 verbunden sein, insbesondere in eine Vertiefung des unteren Gehäuseteils 13 formschlüssig eingesetzt sein. Die Gleitplatten 26 sind in dem in Fig. 4 skizzierten Fall unmittelbar durch die Platten 28 gebildet. In abgewandelter Gestaltung könnten auch in diesem Fall gesonderte Gleitplatten 26 vorgesehen sein, welche sich nach außen, das heißt in Tangentialrichtung des Wälzlagers 5, an jeweils einer Platte 28 abstützen.

### Bezugszeichenliste

- 1: Lageranordnung
- 2: Gehäuse
- 3: Innengehäuse
- 4: Außengehäuse
- 5: Wälzlager, Pendelrollenlager
- 6: Wälzkörper, Tonnenrolle
- 7: Innenring
- 8: Zapfen
- 9: Außenring
- 10: Kontaktbereich
- 11: Schmiermittelkanal
- 12: Linearwälzlagerung
- 13: unteres Gehäuseinnenteil
- 14: oberes Gehäuseinnenteil
- 15: unteres Gehäuseaußenteil
- 16: oberes Gehäuseaußenteil
- 17: Reihe
- 18: Reihe
- 19: Wälzkörper
- 20: statisches Lagerelement
- 21: verschiebbares Lagerelement
- 22: Käfig
- 23: Verdrehsicherung
- 24: Verdrehsicherungselement
- 25: Gegenkontur
- 26: Gleitplatte
- 27: Grundelement
- 28: Platte
- 29: abstützende Kontur des Außengehäuses
- 30: Wälzkörperlaufbahn
- KA: Kippachse
- TE: Teilungsebene

## Patentansprüche

1. Lageranordnung, umfassend ein Wälzlager (5) mit einem Außenring (9), welcher in einem Innengehäuse (3) angeordnet ist, wobei das Innengehäuse (3) gegenüber einem Außengehäuse (4) mittels einer zweireihigen Linearwälzlagerung (12) in Axialrichtung des Wälzlagers (5) verschiebbar ist, wobei die Rotationsachsen sämtlicher Wälzkörper (19) einer jeden Reihe (17, 18) der Linearwälzlagerung (12) jeweils in einer gemeinsamen Ebene liegen und die beiden Ebenen gegeneinander schräggestellt sind, **dadurch gekennzeichnet, dass** mit dem Innengehäuse (3) mindestens ein Verdrehsicherungselement (24) verbunden ist, welches in eine außengehäuseseitige Gegenkontur (25) eingreift.

2. Lageranordnung nach Anspruch 1, **dadurch gekennzeichnet, dass** das Verdrehsicherungselement (24) mittig zwischen den beiden Reihen (17, 18) der Linearwälzlagerung (12) angeordnet ist.

3. Lageranordnung nach Anspruch 2, **dadurch gekennzeichnet, dass** die mit dem Verdrehsicherungselement (24) zusammenwirkende Gegenkontur (25) durch Gleitplatten (26) gebildet ist.

4. Lageranordnung nach Anspruch 3, **dadurch gekennzeichnet, dass** jede Gleitplatte (26) einen einseitigen Abschluss einer im Außengehäuse (4) liegenden Platte (28) darstellt, welche sich andererseits an einem Lagerelement (20) der Linearwälzlagerung (12) abstützt, wobei durch das genannte Lagerelement (20) eine Wälzkörperlaufbahn (30) der Linearwälzlagerung (12) bereitgestellt ist.

5. Lageranordnung nach Anspruch 4, **dadurch gekennzeichnet, dass** jede Gleitplatte (26) an ein Grundelement (27) der Platte (28) grenzt.

6. Lageranordnung nach Anspruch 4, **dadurch gekennzeichnet, dass** jede Gleitplatte (26) einen integralen Bestandteil der Platte (28) darstellt.

7. Lageranordnung nach einem der Ansprüche 4 bis 6, **dadurch gekennzeichnet, dass** sich das Lagerelement (20) der Linearwälzlagerung (12) auf seiner der Platte (28) abgewandten Seite an einer Kontur (29) des Außengehäuses (4) abstützt.

8. Lageranordnung nach einem der Ansprüche 1 bis 7, **dadurch gekennzeichnet, dass** mehrere bolzenförmige Verdrehsicherungselemente (24) vorgesehen sind.

9. Lageranordnung nach einem der Ansprüche 1 bis 7, **dadurch gekennzeichnet, dass** ein einziges, rippenförmiges Verdrehsicherungselement (24) vorgesehen ist.

10. Verwendung einer Lageranordnung nach Anspruch 1 in einem Konverter.

## Claims

1. A bearing assembly comprising a rolling bearing (5) having an outer ring (9), which is arranged in an inner housing (3), the inner housing (3) being movable with respect to an outer housing (4) in the axial direction of the rolling bearing (5) by means of a two-row linear rolling bearing structure (12), the axes of rotation of all the rolling elements (19) in each row (17, 18) of the linear rolling bearing structure (12) lying in a common plane, and the two planes being at an oblique angle to one another, **characterised in that** at least one anti-rotation element (24), which engages in a mating contour (25) in the outer housing, is connected to the inner housing (3).

2. The bearing assembly according to claim 1, **characterised in that** the anti-rotation element (24) is arranged centrally between the two rows (17, 18) of the linear rolling bearing structure (12).

3. The bearing assembly according to claim 2, **characterised in that** the mating contour (25) cooperating with the anti-rotation element (24) is formed by sliding plates (26).

4. The bearing assembly according to claim 3, **characterised in that** each sliding plate (26) represents a one-sided end of a plate (28) located in the outer housing (4), which is supported on the other side on a bearing element (20) of the linear rolling bearing structure (12), a rolling element track (30) of the linear rolling bearing structure (12) being provided by said bearing element (20).

5. The bearing assembly according to claim 4, **characterised in that** each sliding plate (26) adjoins a base element (27) of the plate (28).

6. The bearing assembly according to claim 4, **characterised in that** each sliding plate (26) is an integral part of the plate (28).

7. The bearing assembly according to one of claims 4 to 6, **characterised in that** the bearing element (20) of the linear rolling bearing structure (12) is supported on a contour (29) of the outer housing (4) on its side facing away from the plate (28).

8. The bearing assembly according to one of claims 1 to 7, **characterised in that** a plurality of bolt-shaped anti-rotation elements (24) are provided.

9. The bearing assembly according to one of claims 1 to 7, **characterised in that** a single rib-shaped anti-rotation elements (24) is provided.

10. Use of a bearing assembly according to claim 1 in a converter.

## Revendications

1. - Ensemble palier, comprenant un palier à roulement (5) comportant une bague extérieure (9), qui est agencée dans un boîtier intérieur (3), le boîtier intérieur (3) pouvant être déplacé par rapport à un boîtier extérieur (4) par le biais d'une structure de palier à roulement linéaire (12) à deux rangées dans la direction axiale du palier à roulement (5), dans lequel les axes de rotation de l'ensemble des corps de roulement (19) dans chaque rangée (17, 18) de la structure de palier à roulement linéaire (12) se situent respectivement dans un plan commun et les deux plans sont inclinés l'un par rapport à l'autre, **caractérisé en ce qu'**au moins un élément antirotation (24) est relié au boîtier intérieur (3), lequel vient en prise avec un contour complémentaire (25) côté boîtier extérieur.

2. Ensemble palier selon la revendication 1, **caractérisé en ce que** l'élément antirotation (24) est agencé au centre entre les deux rangées (17, 18) de la structure de palier à roulement linéaire (12).

3. Ensemble palier selon la revendication 2, **caractérisé en ce que** le contour complémentaire (25) coopérant avec l'élément antirotation (24) est formé par des plaques de glissement (26).

4. Ensemble palier selon la revendication 3, **caractérisé en ce que** chaque plaque de glissement (26) représente une extrémité d'un côté d'une plaque (28) située dans le boîtier extérieur (4), laquelle s'appuie de l'autre côté sur un élément de palier (20) de la structure de palier à roulement linéaire (12), dans lequel une piste de roulement de corps de roulement (30) de la structure de palier à roulement linéaire (12) est fournie par ledit élément de palier (20).

5. Ensemble palier selon la revendication 4, **caractérisé en ce que** chaque plaque de glissement (26) est adjacente à un élément de base (27) de la plaque (28).

6. Ensemble palier selon la revendication 4, **caractérisé en ce que** chaque plaque de glissement (26) fait partie de la plaque (28).

7. Ensemble palier selon l'une des revendications 4 à 6, **caractérisé en ce que** l'élément de palier (20) de la structure de palier à roulement linéaire (12) s'appuie, sur son côté tourné à l'opposé de la plaque (28) sur un contour (29) du boîtier extérieur (4).

8. Ensemble palier selon l'une des revendications 1 à 7, **caractérisé en ce que** plusieurs éléments antirotation (24) en forme de boulon sont prévus.

9. Ensemble palier selon l'une des revendications 1 à 7, **caractérisé en ce qu'un** seul élément antirotation (24) en forme de nervure est prévu.

10. Utilisation d'un ensemble palier selon la revendication 1 dans un convertisseur.
